# EUROPEAN PATENT APPLICATION

(11) **EP 1 591 928 A1**
(43) Date of publication of application: **02.11.2005**
(21) Application number: 05252698.5
(22) Date of filing: 29.04.2005
(51) Int. Cl.: G06F 17/30

(54) **System and process for transmission and processing of gaming information across a wide network**

(30) Priority: 30.04.2004 US 837825
(71) Applicant: Daktronics, Inc., Brookings, SD 57006-5128 (US)
(72) Inventor: Grann, Jon Curtis, Sioux Falls, SD 57107 (US); Martens, Samuel, Arlington, SD 57212 (US); Kuck, Anthony Thomas, Brookings, SD 57006 (US)
(74) Representative: Maggs, Michael Norman

(57) **Abstract**

A system to transfer information across the world wide web and, more particularly, a method and a device that allow for the collection, the cataloguing, the analysis, the transfer, and the archiving of game information to databases located at different sites on the world wide web.

## Description

### CROSS REFERENCES TO RELATED APPLICATIONS

None.

### BACKGROUND OF THE INVENTION

### FIELD OF THE INVENTION

The present invention relates to information transfer across the world wide web and, more particularly, to a system and process that allows for the collection, the cataloguing, the analysis, the transfer, and the archiving of game information to databases located at different sites on the world wide web.

### DESCRIPTION OF THE PRIOR ART

Today, many people use personal computers both at their place of work and in their homes. These computers are used for many purposes including word processing, maintaining account and inventory records, playing games and educational enrichment. As a result of the popularity of personal computers, the cost of owning a computer has gone down making them more affordable.

The general availability of personal computers has spawned the popularity of the Internet and other marketed online services. Files or other resources on computers around the world may be publicly available to users of other computers through the collection of networks known as the Internet. The collection of all such publicly available resources, linked together using files written in Hypertext Mark-up Language ("HTML"), is known as the world wide web ("web").

A user of a computer that is connected to the Internet may cause a program known as a client to request resources that are part of the web. Server programs then process the requests to return the specified resources. A standard naming convention has been adopted, known as a Uniform Resource Locator ("URL"). This convention encompasses several types of location names, presently including subclasses such as Hypertext Transport Protocol ("HTTP"), File Transport Protocol ("FTP"), gopher and Wide Area Information Service ("WAIS").

The various resources accessible via the web are created and maintained by many different people on servers located all around the world, and may be created for many different purposes. Many individuals and businesses now have their own web sites that can be visited by people "surfing" the web. These web sites typically provide information on a myriad of subjects such as sports, business, news and even community events. Many businesses have introduced internet services that attempt to collect and warehouse game related statistical information (iHigh.com, InstaSports). Sports organisations have also tried to automate statistics reporting using web-based solutions. These businesses and organisations have struggled because the reporting method often consisted of manually re-entering the statistics on a website. The posting of statistics relied on voluntary participation of coaches, team managers and other sports information professionals. Success has been limited because the process of posting statistics on these sites is time consuming and lacks the convenience necessary to ensure long-term participation. At the same time, coaches and sports information professionals are using statistics software packages to track the statistics for their team because the programs reduce the time it takes to compile the information. No simple interface has existed between the statistics software and the central databases.

The WebSync feature of DakStats was created to provide a convenient link between the statistical software operated by coaches and the Internet based statistical sites. Coaches use DakStats 3000 statistical software to track their game and season statistics. The WebSync feature built into DakStats allows the coaches to connect with a central database by means of the Internet and to upload their statistics in a matter of seconds. The WebSync can also give them access to new competitions and opponent rosters.

The present invention allows statistical software users to exchange team, competition and roster information and to upload statistics to a central database by means of the Internet.

### DEFINITIONS

The term "DakStats" is to be interpreted according to the common understanding of the word and additionally includes, but is not limited to, all versions of software used to perform the following functions in any combination: collect game information; compile game information; catalogue game information; archive game information; analyze game information; or transmit game information over the world wide web, the Ethernet, or the Internet.

DakStats **88** is a computer algorithm, comprising a set of instructions, that causes a general purpose computer to generate a sequence of electrical signals. The instructions contained in DakStats **88**, for generating a sequence of electrical signals, are executed on a DakStats server **65**. In one embodiment, the sequence of electrical signals results in a change of state of a magnetic storage media. In another embodiment, the sequence of electrical signals results in a change of state of a random access memory media. In still another embodiment, the sequence of electrical signals results in a change of state of a read only memory media. In yet another embodiment, the sequence of electrical signals results in a change of state of an optical storage media. In one embodiment, the change of state of a magnetic storage media encodes a database. In another embodiment, the change of state of a random access memory media encodes a database. In still another embodiment, the change of state of a read only memory media encodes a database. In yet another embodiment, the change of state of an optical storage media encodes a database. In one embodiment, the database is a DakStats database **92**. In another embodiment, the database is a statistical software database. In still another embodiment, the database is a spreadsheet database. In yet another embodiment, the database is associated with a database program.

The phrase "central server software" is to be interpreted according to the common understanding of the word and additionally includes, but is not limited to, all versions of software used to perform the following functions in any combination: collect information; compile information; catalogue information; archive information; analyze information; or transmit information. The phrase "central server software" is also to be interpreted to include, but not be limited to, all versions of central server software **192.**

Central server software **192** is a computer algorithm, comprising a set of instructions, that causes a general purpose computer to generate a sequence of electrical signals. In one embodiment, the sequence of electrical signals results in a change of state of a magnetic storage media. In another embodiment, the sequence of electrical signals results in a change of state of a random access memory media. In still another embodiment, the sequence of electrical signals results in a change of state of a read only memory media. In yet another embodiment, the sequence of electrical signals results in a change of state of an optical storage media. In one embodiment, the change of state of a magnetic storage media encodes a database. In another embodiment, the change of state of a random access memory media encodes a database. In still another embodiment, the change of state of a read only memory media encodes a database. In yet another embodiment, the change of state of an optical storage media encodes a database. In one embodiment, the database is a central server database **72**. In another embodiment, the database is a statistical software database. In still another embodiment, the database is a spreadsheet database. In yet another embodiment, the database is associated with a database program.

The phrase "magnetic storage media" is to be interpreted according to the common understanding of the phrase and additionally includes, but is not limited to, any film that is susceptible to the imposition of a magnetic field and is designed for use in a computer system. The phrase "random access memory" is to be interpreted according to the common understanding of the phrase and additionally includes, but is not limited to, random access memory chips. The phrase "read only memory" is to be interpreted according to the common understanding of the phrase and additionally includes, but is not limited to, compact discs (CD), and digital video and data (DVD) discs, and write-once-read-many (WORM) optical discs. The phrase "optical storage media" is to be interpreted according to the common understanding of the phrase and additionally includes, but is not limited to, optical storage discs.

The phrase "communication interface" is to be interpreted according to the common understanding of the phrase and additionally includes, but is not limited to, the Internet, the world wide web, or any combination of mechanical couplings, physical couplings, electrical couplings, magnetic couplings, or electro-magnetic couplings designed to transmit a set of electrical signals, transmit a set of magnetic signals, or transmit a set of electro-magnetic signals between two or more computers. The phrase "communication interface" is also to be interpreted to include, but not be limited to, all versions of central server software **192**.

The term "game" is to be interpreted according to the common understanding of the term and additionally includes, but is not limited to, an interaction between two or more entities in which there is a conflict of interest between two or more of the entities involved. Thus, the term "game" includes the socially unimportant interest conflicts characteristic of parlour games in addition to economic interactions and military situations.

The term "information" is to be interpreted according to the common understanding of the term and additionally includes, but is not limited to, statistics and data.

The term "disc" is to be interpreted according to the common understanding of the term and additionally includes, but is not limited to, a magnetic computer disc, an optical computer disc, a magnetic-optical computer disc, a computer storage disc, random access memory, read-only memory, magnetic tape, and any other media used for storage of digital signals.

The term "receive" when used in connection with an operation performed by a computer or an electrical device, is to be interpreted according to the common understanding of the phrase and additionally includes, but is not limited to, receiving a sequence of electrical signals that encode an information stream, receiving a sequence of optical signals that encode an information stream, and receiving a sequence of magnetic signals that encode an information stream.

The term "transmit" when used in connection with an operation performed by a computer or an electrical device, is to be interpreted according to the common understanding of the phrase and additionally includes, but is not limited to, transmitting a sequence of electrical signals that encode an information stream, transmitting a sequence of optical signals that encode an information stream, and transmitting a sequence of magnetic signals that encode an information stream.

### SUMMARY OF THE INVENTION

The general purpose of the present invention is to provide a system and a process for the transfer of game information across the world wide web, including: a system and a process that allows for the collection, the cataloguing, the analysis, the transfer, and the archiving of game information to databases located at disparate sites on the world wide web.

In one embodiment of the present invention, there is a system for sending a stream of game information across a wide area network using a standard communication protocol command comprising: an information generating means; a serial to TCP/IP conversion means in electrical communication with said information generating means; a wide area communication means in electrical communication with said serial to TCP/IP conversion means; and an information receiving means in electrical communication with said communication means, wherein the serial to TCP/IP conversion means embeds information into a standard communication protocol command.

In yet another embodiment of the present invention, there is a process for sending a stream of information across a wide area network using a standard communication protocol command comprising the steps of: generating a quantity of information; embedding the quantity of information into a hypertext transfer protocol command; sending said embedded information across a wide area communication means; and receiving said embedded information.

In still another embodiment of the present invention, there is a device for linking an information generating means to a wide area communication means comprising: a communication line; a linking device connected to the communication line; and a wide area communication means connected to said linking device, wherein said linking device embeds information into a standard communication protocol command.

In yet still another embodiment of the present invention, there is a process for transmitting a stream of information from a information generating means to a wide area communication means comprising the steps of: sending information on a communication line; receiving said information by a linking device; embedding said information into a standard communication protocol command; and sending said embedded information across a wide area communication network.

In a further embodiment of the present invention, there is a device for embedding a stream of information into a standard communication protocol command comprising: an information receiving means; a standard communication protocol command generating means in electrical communication with the data receiving means; an information stream embedding means in electrical communication with the standard communication protocol command generating means; and a wide area communication means in electrical communication with the data embedding means.

### BRIEF DESCRIPTION OF THE DRAWINGS

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:

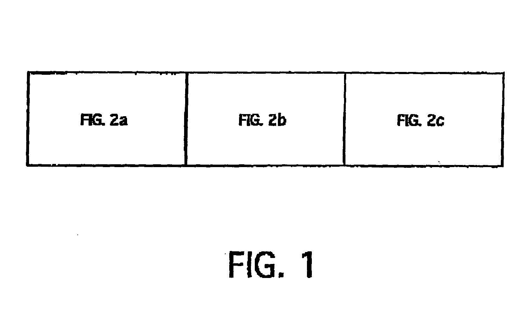

**FIG. 1** illustrates an alignment of **FIGS. 2a**, **2b** and **2c** with respect to each other;

**FIGS. 2a**, **2b** and **2c** illustrate the device for the collection, the cataloguing, the analysis, and the archiving of game data from disparate locations using a wide area network;

**FIG. 3** illustrates the process for the collection, the cataloguing, the analysis, and the archiving of game data from disparate locations using a wide area network;

**FIGS. 4a**, **4b** and **4c** illustrate Process 1 of the process of **FIG. 3** for the collection, the cataloguing, the analysis, and the archiving of game data from disparate locations using a wide area network;

**FIGS. 5a, 5b, 5c, 5d and 5e** illustrate Process 2 of the process of **FIG. 3** for the collection, the cataloguing, the analysis, and the archiving of game data from disparate locations using a wide area network;

**FIG. 6** illustrates Process 3 of the process of **FIG. 3** for the collection, the cataloguing, the analysis, and the archiving of game data from disparate locations using a wide area network;

**FIG. 7a** illustrates the set of elements identifying a single team;

**FIG. 7b** illustrates the set of teams identifying a single league;

**FIG. 8** illustrates a device and process for the comparison of two teams within a single league; and,

**FIG. 9** illustrates the relationship of the user interface, a remote communication interface, and a remote user interface.

### DETAILED DESCRIPTION OF THE PREFERRED EMBODIMENTS

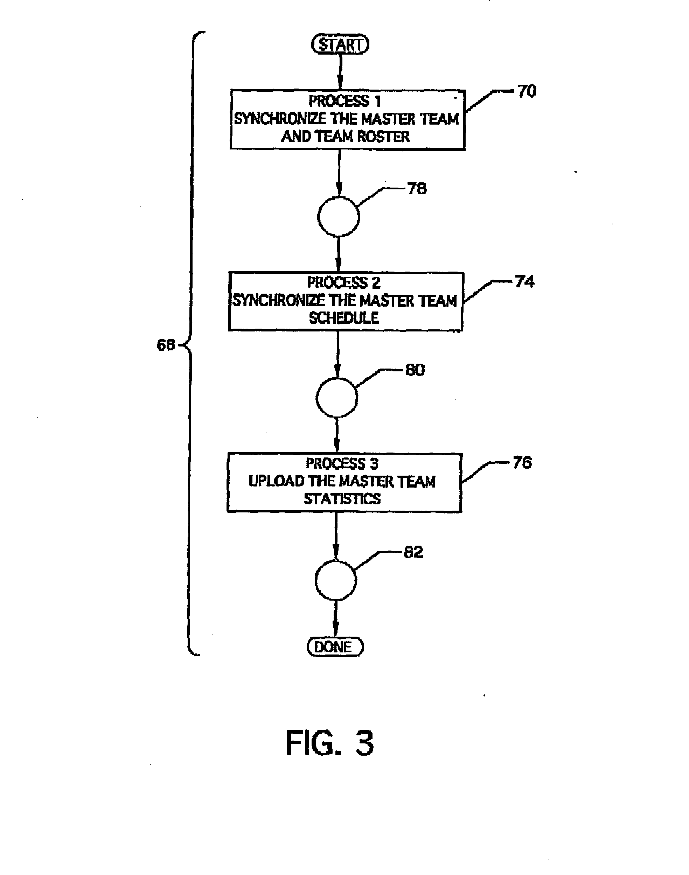

The present invention includes a device **10** for transmitting a stream of game information across a wide area network, including a TCP/IP network such as Ethernet or the Internet and the world wide web. The present invention comprises a process **68,** as shown in **FIG. 3,** for transmitting a stream of game information across a wide area network, including a TCP/IP network such as Ethernet or the Internet.

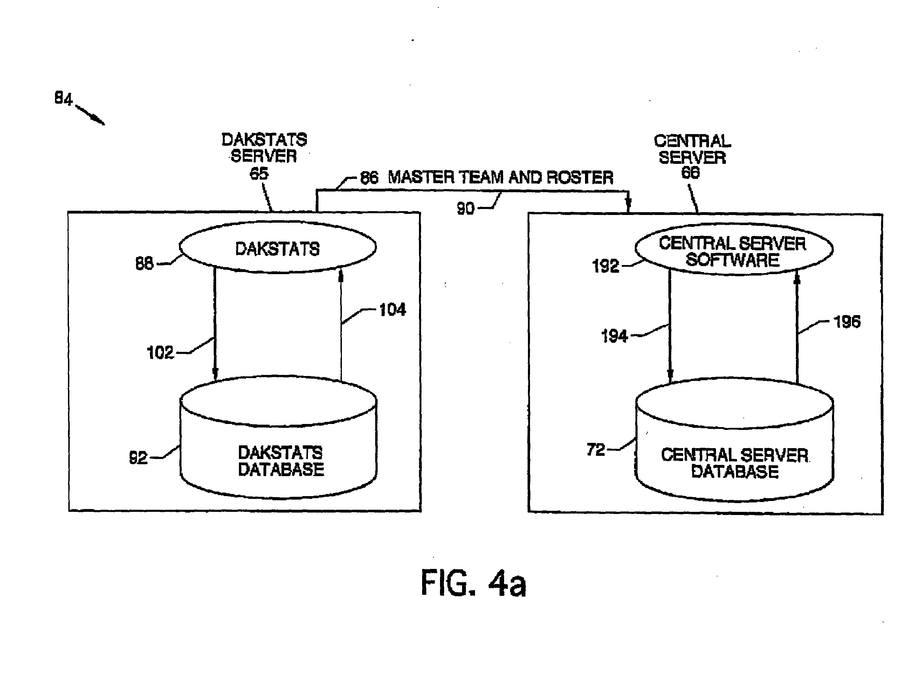

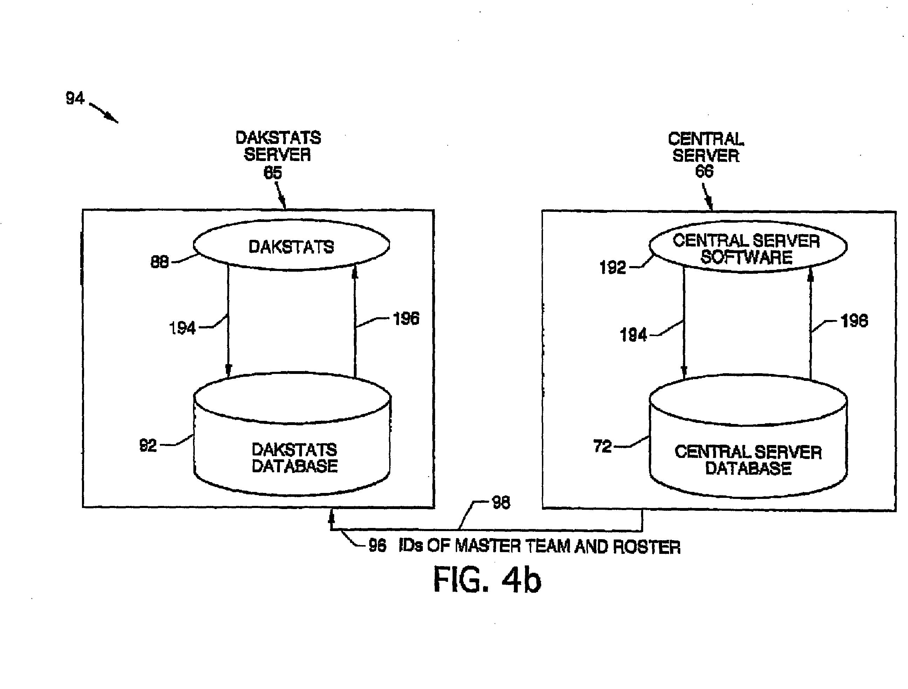

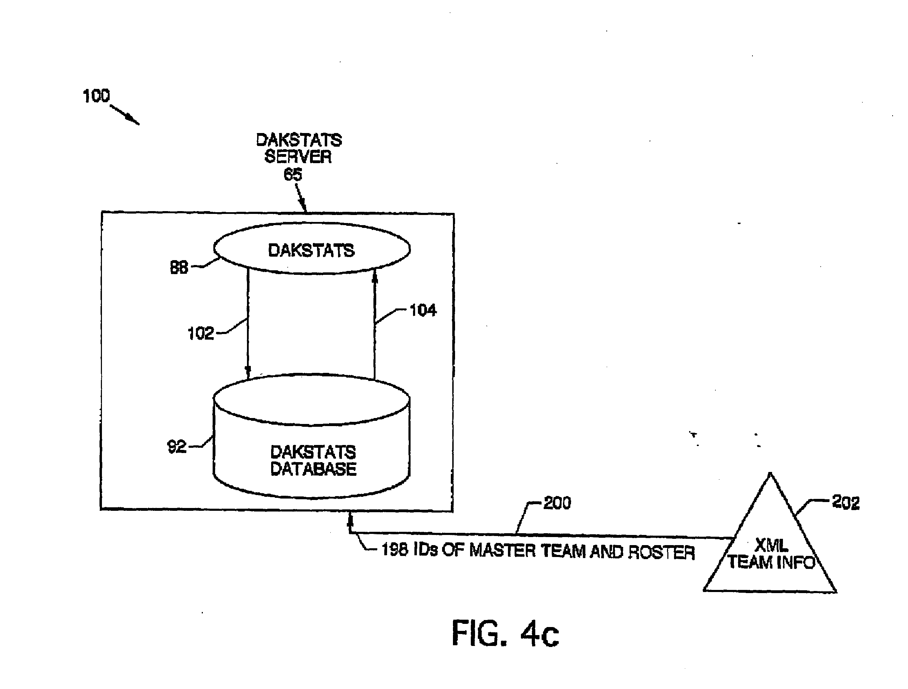

In order for data to be exchanged with a central server database **72,** which resides on a central server **66** shown in (**FIGS. 4a, 4b and 4c**), it is necessary for the data to be converted to a format that is easily transmitted and converted to match the different database structures used in DakStats **88** and on the central server **66**. It is also necessary to be able to uniquely identify each team and each competition as information is being exchanged.

The WebSync program formats the information into an XML file format and transmits it using the HTTP POST command to exchange data between DakStats and the database server. A standard communication protocol command, such as HTTP POST, is used to transmit game information from a first server to a second server. Specifically, the game information data stream is embedded into an HTTP POST command as an entity; and the HTTP POST command, including the entity, is then transmitted using a TCP/IP network. When the central server database **72** receives the XML stream, it must map the DakStats statistical information contained in the XML stream to match the structure of the server database. The central server also uses the same XML format to send information back to the DakStats database.

To properly identify the institutions as they begin the WebSync, unique server IDs are assigned to each institution using the WebSync. These server IDs are static and are stored in the DakStats database and in the central database prior to performing a WebSync. In some applications, a league ID is necessary to properly identify each of the teams that are being synchronized since each institution is capable of having multiple teams (e.g., men's basketball, woman's basketball, football, etc.). If league IDs are necessary, they are dynamically assigned by the central database when teams perform the WebSync for the first time and are also stored in DakStats. League IDs are also reassigned at the start of each season to properly separate teams over different seasons. Another server ID is necessary to properly identify competitions that are stored in DakStats and in the central server. The central server dynamically assigns these IDs as competitions are added to the server and DakStats stores the competition IDs so that competitions can be properly matched when performing the WebSync.

Once the information is entered into DakStats, the user enters a user name and password and activates the WebSync. The team that is performing the WebSync is the master team. The server that hosts the central database of sports information is the central server. According to **FIG. 3,** the WebSync is broken down into several processes **68,** including, but not limited to: Process **170** that synchronizes the master team and team roster; Process 2 **74** that synchronizes the master team schedule; and Process 3 **76** that uploads the master team statistics. These processes are necessary to synchronize DakStats information of the master team with the database on the central server.

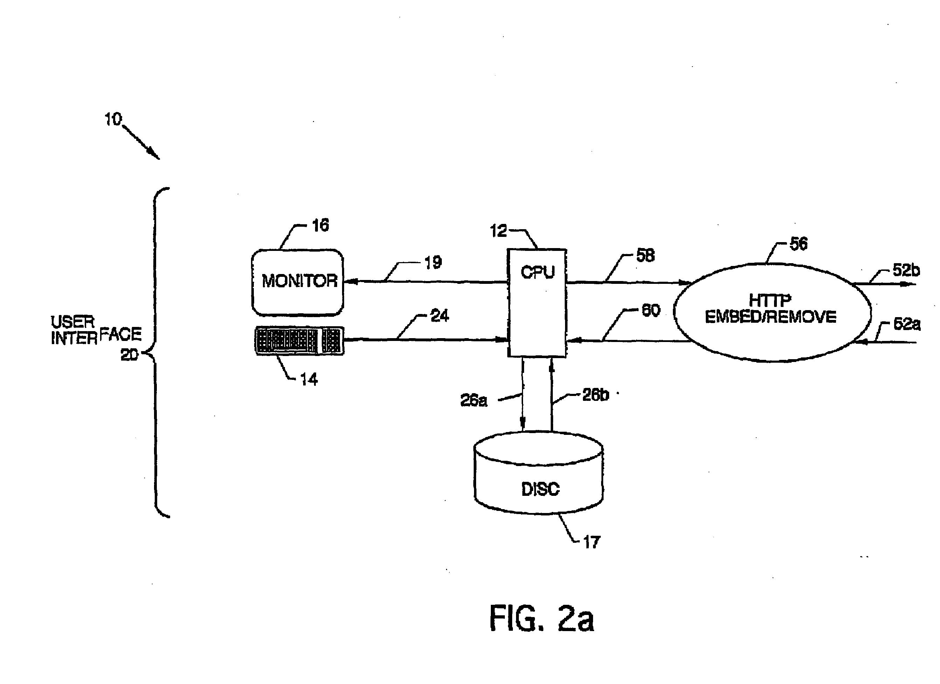

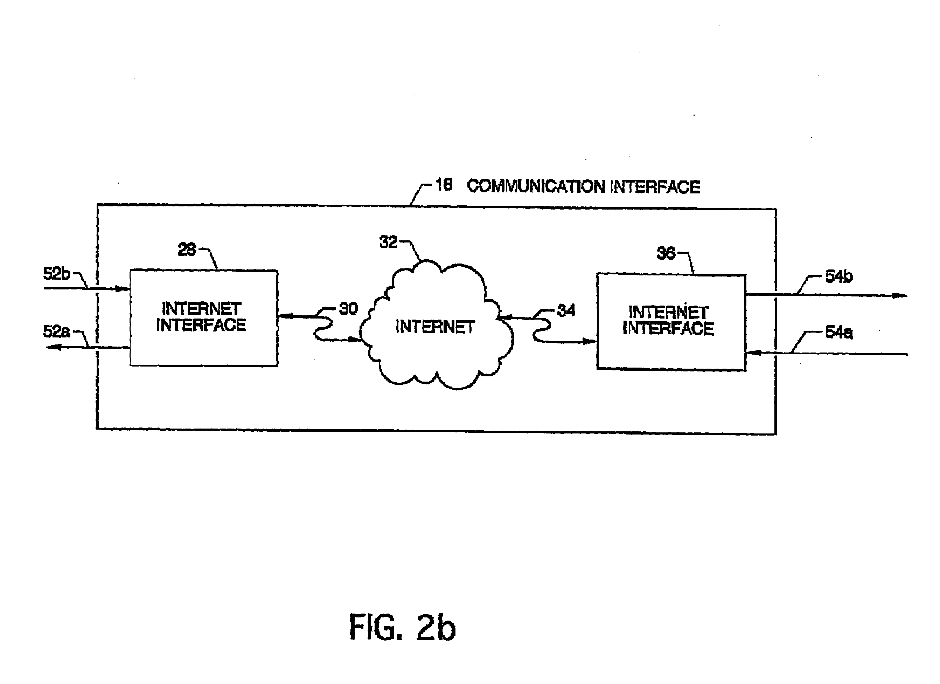

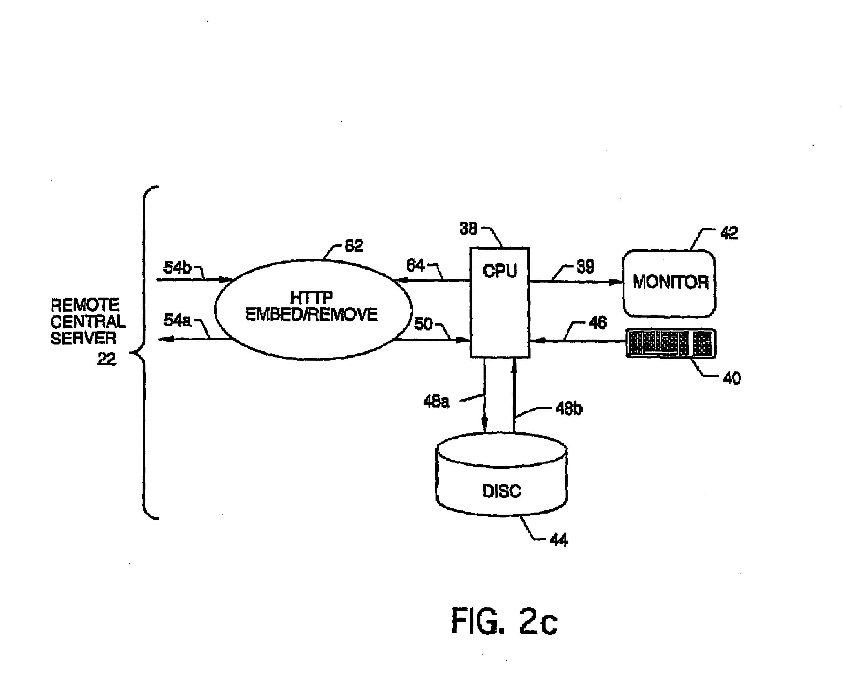

**FIGS. 2a**, **2b** and **2c** illustrate the device **10** corresponding to the claimed invention. In one embodiment, as illustrated in **FIG. 2a**, a first CPU **12** (central processing unit) operates as an information processor. In another embodiment, a keyboard **14** operates in direct electrical communication with the first CPU **12** to input information. In yet another embodiment, a first monitor **16** operates in direct electrical communication along communication path **19** with the first CPU **12** for information output. In still another embodiment, a first disc **17** operates in direct electrical communication with the first CPU **12** along communication paths **26a** and **26b** for information storage. In one embodiment, the first CPU **12** also operates to analyze information. In yet another embodiment, a general purpose computer operates to analyze information. In still another embodiment, analyzed information is in electrical communication with the first CPU **12** for information processing. In one embodiment, the first CPU **12** operates to catalog information. In yet another embodiment, a general purpose computer operates to catalog information. In still another embodiment, cataloged information is in electrical communication with the first CPU **12** for information processing. In one embodiment, the first CPU **12** operates to archive information. In yet another embodiment, a general purpose computer operates to archive information. In still another embodiment, archived information is in electrical communication with the first CPU **12**.

In one embodiment, the communication interface **18** operates to transmit information. In another embodiment, a user interface **20** operates to synchronize information. In another embodiment, a remote central server **22** operates to synchronize information. In another embodiment, the remote central server **22** operates to synchronize game information where said transmitted information and processed information are in electrical communication, and synchronized information and processed information are in electrical communication. In still another combination, the communication interface **18** in combination with the remote central server **22** operates to synchronize information where said synchronized information and processed information are in electrical communication. In yet another embodiment, the remote central server **22** operates to store information. In still another combination, the user interface **20** in combination with the communication interface **18** in combination with the stored information operates to synchronize information where synchronized information is in direct electrical communication with the first CPU **12**.

**FIG. 2a** illustrates, in one embodiment, the first CPU **12** operates to process information. In another embodiment, the first CPU **12** operates to analyze information. In one embodiment, the keyboard **14** operates to input information for transmitting information by communication path **24** to the first CPU **12** for information processing. In another embodiment, the keyboard **14** operates to input information for transmitting information by communication path **24** to the first CPU **12** for information analysis. In one embodiment, the disc **17** operates to input information for transmitting information by communication path **26b** to the first CPU **12** for information processing. In another embodiment, the first disc **17** operates to input information for transmitting information along communication path **26b** to the first CPU **12** for information analysis. In one embodiment, the communication interface **18** operates to input information for transmitting information by communication path **60** to the first CPU **12** for information processing. In another embodiment, the communication interface **18** operates to input information for transmitting information by communication path **60** to the first CPU **12** for information analysis.

**FIG. 2b** illustrates, in one embodiment, the communication interface **18** is comprised of a first internet interface **28** in electrical communication along communication path **30** with a wide area network, such as the internet **32.** In another embodiment, a communication interface **18** is comprised of wide area network, such as the internet **32,** in electrical communication along communication path **34** with a second internet interface **36.** The user interface **20** and communication interface **18** are in electrical communication. Said remote server **22** and communication interface **18** are in electrical communication.

**FIG. 2c** illustrates, in one embodiment, a second CPU **38** operates to process information. In another embodiment, a second keyboard **40** operates in direct electrical communication with the second CPU **12** to input information. In yet another embodiment, a second monitor **42** operates in direct electrical communication with the second CPU **38** along communication path **39** for information output. In still another embodiment, a second disc **44** operates in direct electrical communication along communication paths **48a** and **48b** with the second CPU **38** for information storage. In one embodiment, a second CPU **38** operates to analyze information. In yet another embodiment, a second general purpose computer operates to analyze information. In still another embodiment, analyzed information is in electrical communication with the second CPU **38** for information processing.

Still in **FIG. 2c**, in one embodiment, the second CPU **38** operates to process information. In one embodiment, the communication interface **18** operates to transmit information where the interface **18** and second CPU **12** are in electrical communication. In another embodiment, the user interface **20** operates to synchronize information where the user interface **20** and the second CPU **38** are in electrical communication. In still another combination, the communication interface **18** in combination with the user interface **20** operate to synchronize information where synchronized information and processed information are in electrical communication. In yet another embodiment, the user interface **20** operates to store information. In still another combination, the remote central server **22** in combination with the communication interface 18 in combination with user interface **20** operate to synchronize information where synchronized information is in electrical communication with the processed information at the second CPU **38**.

Still in **FIG. 2c**, in one embodiment, the second CPU **38** operates to process information. In another embodiment, the second CPU **38** operates to analyze information. In one embodiment, the second keyboard **42** operates to input information for transmitting by communication path **46** to the second CPU **38** for information processing. In another embodiment, the second keyboard **42** operates to input information for transmission by communication path **46** to the second CPU **38** for information analysis. In one embodiment, the second disc **44** operates to input information for transmission by communication path **48b** information to the second CPU **38** for information processing. In another embodiment, the second disc **44** operates to input information for transmission by communication path **48b** to the second CPU **38** for information analysis. In one embodiment, the communication interface **18** operates to input information for transmission by communication path **50** to the second CPU **38** for information processing. In another embodiment, the communication interface **18** operates to input information for transmission by communication path **50** to the second CPU **38** for information analysis. In one embodiment, the second CPU **38** operates to archive information. In yet another embodiment, a general purpose computer operates to archive information. In **FIGS. 2a**, **2b and 2c**, in one embodiment, the user interface **20** transmits information by communication path **52b** to a remote central server **22** through the communication interface **18**. The user interface **20** and remote central server **22** are in electrical communication or the user interface **20** and remote central server **22** are in electro-magnetic communication. In another embodiment, the user interface **20** receives information by communication path **54a** from the remote central server **22** through the communication interface **18.** In yet another embodiment, the remote central server **22** transmits information by communication path **54a** to the user interface **20** through the communication interface **18**. In still another embodiment, the remote central server **22** receives information by communication path **54b** from the user interface **20** through the communication interface **18**.

In one embodiment, the first CPU **12** operates to process information. In another embodiment, the first CPU **12** operates to analyze information. In one embodiment, the communication interface **18** operates to transmit information for transmission by communication path **52a** to the first CPU **12** for information processing. In another embodiment, the communication interface **18** operates to transmit information for transmission by communication path **52a** to the first CPU **12** for information analysis. In one embodiment, the communication interface **18** operates to transmit information for transmission by communication path **52b** from the first CPU **12** for information processing. In another embodiment, the communication interface **18** operates to transmit information for transmission by communication path **52b** from the first CPU **12** for information analysis.

In one embodiment, the second CPU **38** operates to process information. In another embodiment, the second CPU **38** operates to analyze information. In one embodiment, the communication interface **18** operates to transmit information for transmission by communication path **54b** to the second CPU **38** for information processing. In another embodiment, the communication interface **18** operates to transmit information for transmission by communication path **54b** to the second CPU **38** for information analysis. In one embodiment, the communication interface **18** operates to transmit information for transmission by communication path **54a** from the second CPU **38** for information processing. In another embodiment, the communication interface **18** operates to transmit information for transmission by communication path **54a** from the second CPU **38** for information analysis.

In yet another embodiment, the communication interface **18** operates to transmit information for receiving information by communication path **54a** from the remote central server **22**. In still another embodiment, the communication interface **18** operates to transmit information for transmission by communication path **54b** to a remote central server **22.**

In one embodiment, illustrated in **FIG. 2a,** an HTTP embed/remove device **56** and a first CPU **12** are in electrical communication. In another embodiment, the HTTP embed/remove device **56** and the first CPU **12** are in electro-magnetic communication. In yet another embodiment, the HTTP embed/remove device **56** and the communication interface **18** are in electrical communication. In another embodiment, the HTTP embed/remove device **56** and the communication interface **18** are in electro-magnetic communication. In one embodiment, the first CPU **12** operates as the HTTP embed/remove device **56**. In another embodiment, a microprocessor operates the HTTP embed/remove device **56**. In still another embodiment, a general purpose computer operates as the HTTP embed/remove device **56**.

In one embodiment, illustrated in **FIG. 2a**, the HTTP embed/remove device **56** receives a game information data stream from the first CPU **12** by communication path **58**. In another embodiment, the HTTP embed/remove device **56** operates to embed a game information data stream into a HTTP POST command as an entity. In still another embodiment, the HTTP POST command, including the entity, is transmitted using a wide area network, such as a TCP/IP network or the communication interface **18.** In yet another embodiment, a HTTP embed/remove device **56** operates to embed a game information data stream into a HTTP POST command as an entity; and the HTTP POST command, including the entity, is then transmitted to the remote central server **22** using a wide area network, such as a TCP/IP network or the communication interface **18**. In another embodiment, a HTTP embed/remove device **56** transmits a game information data stream to the communication interface **18** by communication path **52b**.

In one embodiment, the HTTP embed/remove device **56** receives a HTTP POST command, including the entity, from the communication interface **18** by communication path **52a**. In another embodiment, a HTTP embed/remove device **56** operates to remove a game information data stream from a HTTP POST command as an entity. In another embodiment, a HTTP embed/remove device **56** transmits a game information data stream to a first CPU **12** by communication path **60**.

In one embodiment, illustrated in **FIG. 2c**, a HTTP embed/remove device **62** and the second CPU **38** are in electrical communication. In another embodiment, the HTTP embed/remove device **62** and the second CPU **38** are in electro-magnetic communication. In yet another embodiment, the HTTP embed/remove device **62** and the communication interface **18** are in electrical communication. In another embodiment, the HTTP embed/remove device **62** and the communication interface **18** are in electro-magnetic communication. In one embodiment, the second CPU **38** operates as the HTTP embed/remove device **62**. In another embodiment, a microprocessor operates the HTTP embed/remove device **62**. In still another embodiment, a general purpose computer operates as the HTTP embed/remove device **62**.

In one embodiment, illustrated in **FIG. 2c,** the HTTP embed/remove device **62** receives by communication path **64** a game information data stream from the second CPU **38**. In another embodiment, the HTTP embed/remove device **62** operates to embed a game information data stream into a HTTP POST command as an entity. In still another embodiment, the HTTP POST command, including the entity, is transmitted using a wide area network, such as a TCP/IP network or the communication interface **18**. In yet another embodiment, a HTTP embed/remove device **62** operates to embed a game information data stream into a HTTP POST command as an entity; and the HTTP POST command, including the entity, is then transmitted to the user interface **20** using a wide area network, such as a TCP/IP network or the communication interface **18**. In another embodiment, the HTTP embed/remove device **62** transmits by communication path **54a** a game information data stream to a communication interface **18**.

In one embodiment, a HTTP embed/remove device **62** receives a HTTP POST command, including the entity, from the communication interface **18** by communication path **54b**. In another embodiment, a HTTP embed/remove device **62** operates to remove a game information data stream from a HTTP POST command as an entity. In another embodiment, the HTTP embed/remove device **62** transmits a game information data stream to the second CPU **38** by communication path **50**.

In one embodiment, illustrated in **FIG. 2a**, the HTTP embed/remove device **56** receives a synchronizing instruction stream from the first CPU **12** by communication path **58**. In another embodiment, the HTTP embed/remove device **56** operates to embed a synchronizing instruction stream into a HTTP POST command as an entity. In still another embodiment, the HTTP POST command, including the entity, is transmitted using a wide area network, such as a TCP/IP network or the communication interface **18**. In yet another embodiment, the HTTP embed/remove device **56** operates to embed a synchronizing instruction stream into a HTTP POST command as an entity; and the HTTP POST command, including the entity, is then transmitted to the remote central server **22** using a wide area network, such as the TCP/IP network or the communication interface **18**. In another embodiment, the HTTP embed/remove device **56** transmits a synchronizing instruction stream to the communication interface **18** by communication path **52b**.

In one embodiment, the HTTP embed/remove device **56** receives a HTTP POST command, including the entity, from the communication interface **18** by communication path **52a**. In another embodiment, the HTTP embed/remove device **56** operates to remove a synchronizing instruction stream from a HTTP POST command as an entity. In another embodiment, the HTTP embed/remove device **56** transmits a synchronizing instruction stream to the first CPU **12** by communication path **60**.

In one embodiment, illustrated in **FIG. 2c**, the HTTP embed/remove device **62** receives a synchronizing instruction stream from the second CPU **38** by communication path **64**. In another embodiment, the HTTP embed/remove device **62** operates to embed a synchronizing instruction stream into a HTTP POST command as an entity. In still another embodiment, the HTTP POST command, including the entity, is transmitted using a wide area network, such as a TCP/IP network or the communication interface **18**. In yet another embodiment, the HTTP embed/remove device **62** operates to embed a synchronizing instruction stream into a HTTP POST command as an entity; and the HTTP POST command, including the entity, is then transmitted to the user interface **20** using a wide area network, such as a TCP/IP network or the communication interface **18**. In another embodiment, the HTTP embed/remove device **62** transmits a synchronizing instruction stream to the communication interface **18** by communication path **54a**.

In one embodiment, the HTTP embed/remove device **62** receives a HTTP POST command, including the entity, from the communication interface **18** by communication path **54b**. In another embodiment, a HTTP embed/remove device **62** operates to remove a synchronizing instruction stream from a HTTP POST command as an entity. In another embodiment, the HTTP embed/remove device **62** transmits a synchronizing instruction stream to the second CPU **38** by communication path **50**.

In one embodiment, a set of electrical signals are generated that encode commands for embedding a game information data stream into a standard communication protocol command, such as HTTP POST. In another embodiment, a set of magnetic signals are generated that encode commands for embedding a game information data stream into a standard communication protocol command, such as HTTP POST. In still another embodiment, a set of optical signals are generated that encode commands for embedding a game information data stream into a standard communication protocol command, such as HTTP POST.

In one embodiment, illustrated in **FIG. 2a**, the first CPU **12** receives a game information data stream from the HTTP embed/remove device **56** by communication path **60**. In another embodiment, the first CPU **12** receives a synchronizing instruction stream from a HTTP embed/remove device **56** by communication path **60**. In still another embodiment, the first CPU **12** executes said synchronizing instruction stream. In yet another embodiment, the first CPU **12** generates a set of electrical signals encoding results of the synchronizing instruction stream. In one embodiment, the first CPU **12** generates a set of magnetic signals encoding results of the synchronizing instruction stream. In yet another embodiment, the first CPU **12** generates a set of optical signals encoding results of the synchronizing instruction stream.

In one embodiment, a set of electrical signals are generated by the first CPU **12** that encode commands for writing a game information data stream onto the first disc **17**. In another embodiment, a set of optical signals are generated by the first CPU **12** that encode commands for writing a game information data stream onto the first disc **17**. In still another embodiment, a set of magnetic signals are generated by the first CPU **12** that encode commands for writing a game information data stream onto the first disc **17**. In one embodiment, the electrical signals operate to store a game information data stream onto the disc **17**. In one embodiment, the optical signals operate to store a game information data stream onto the first disc **17**. In one embodiment, the magnetic signals operate to store a game information data stream onto the first disc **17**.

In one embodiment, illustrated in **FIG. 2c**, the second CPU **38** receives a game information data stream from the HTTP embed/remove device **62** by communication path **50**. In another embodiment, the second CPU **38** receives a synchronizing instruction stream from the HTTP embed/remove device **62** by communication path **50**. In still another embodiment, the second CPU **38** executes the synchronizing instruction stream. In yet another embodiment, the second CPU **38** generates a set of electrical signals encoding results of the synchronizing instruction stream.

In one embodiment, a set of electrical signals are generated by the second CPU **38** that encode commands for writing a game information data stream onto the second disc **44**. In another embodiment, a set of optical signals are generated by the second CPU **38** that encode commands for writing a game information data stream onto the second disc **44**. In still another embodiment, a set of magnetic signals are generated by the second CPU **38** that encode commands for writing a game information data stream onto the second disc **44**. In one embodiment, said electrical signals operate to store a game information data stream onto the second disc **44**. In one embodiment, the optical signals operate to store a game information data stream onto the second disc **44**. In one embodiment, the magnetic signals operate to store a game information data stream onto the second disc **44**.

In one embodiment, illustrated in **FIG. 2a**, the HTTP embed/remove device **56** receives computer executable instructions from the first CPU **12** by communication path **58**. In another embodiment, the HTTP embed/remove device **56** operates to embed computer executable instructions into a HTTP POST command as an entity. In still another embodiment, the HTTP POST command, including the entity, is transmitted using a wide area network, such as a TCP/IP network or the communication interface **18**. In yet another embodiment, the HTTP embed/remove device **56** operates to embed computer executable instructions into a HTTP POST command as an entity; and the HTTP POST command, including the entity, is then transmitted to the remote central server **22** using a wide area network, such as a TCP/IP network or the communication interface **18.** In another embodiment, the HTTP embed/remove device **56** transmits computer executable instructions to the communication interface **18** by communication path **52b**.

In one embodiment, the HTTP embed/remove device **56** receives an HTTP POST command, including the entity, from the communication interface **18** by communication path **52a**. In another embodiment, the HTTP embed/remove device **56** operates to remove computer executable instructions from an HTTP POST command as an entity. In another embodiment, the HTTP embed/remove device 56 transmits computer executable instructions to the first CPU **12** by communication path **60**.

In one embodiment, illustrated in **FIG. 2c,** the HTTP embed/remove device **62** receives computer executable instructions from the second CPU **38** by communication path **64**. In another embodiment, the HTTP embed/remove device **62** operates to embed computer executable instructions into an HTTP POST command as an entity. In still another embodiment, the HTTP POST command, including the entity, is transmitted using a wide area network, such as a TCP/IP network or the communication interface **18**. In yet another embodiment, the HTTP embed/remove device **62** operates to embed computer executable instructions into an HTTP POST command as an entity; and the HTTP POST command, including the entity, is then transmitted to the user interface **20** using a wide area network, such as a TCP/IP network or the communication interface **18**. In another embodiment, the HTTP embed/remove device **62** transmits computer executable instructions to the communication interface **18** by communication path **54a**.

In one embodiment, the HTTP embed/remove device **62** receives an HTTP POST command, including the entity, from the communication interface **18** by communication path **54b**. In another embodiment, the HTTP embed/remove device **62** operates to remove computer executable instructions from an HTTP POST command as an entity. In another embodiment, the HTTP embed/remove device **62** transmits computer executable instructions to the second CPU **38** by communication path **50.**

In one embodiment, illustrated in **FIG. 2a,** the first CPU **12** receives a game information data stream from the HTTP embed/remove device **56** by communication path **60**. In another embodiment, the first CPU **12** receives computer executable instructions from the HTTP embed/remove device **56** by communication path **60**. In still another embodiment, the first CPU **12** executes the computer executable instructions. In yet another embodiment, the first CPU **12** generates a set of electrical signals encoding results of the computer executable instructions.

In one embodiment, illustrated in **FIG. 2c**, the second CPU **38** receives a game information data stream from the HTTP embed/remove device **62** by communication path **50**. In another embodiment, the second CPU **38** receives computer executable instructions from the HTTP embed/remove device **62** by communication path **50**. In still another embodiment, the second CPU **38** executes the computer executable instructions. In yet another embodiment, the second CPU **38** generates a set of electrical signals encoding results of the computer executable instructions.

In one embodiment the first disc **17** operates as database storage. In one embodiment, the information stored on the first disc **17** is synchronized with the information stored on the second disc **44**. In one embodiment, the first CPU **12** receives electrical signals from the first disc **17** encoding a first database. In another embodiment, the first CPU **12** receives magnetic signals from the first disc **17** encoding a first database. In still another embodiment the first CPU **12** receives optical signals from the first disc **17** encoding a first database. In another embodiment, the first CPU **12** receives by communication path **60** a game information data stream from the second CPU **38**. In another embodiment, the first CPU **12** receives by communication path **60** a synchronizing instruction stream from the second CPU **38**. In still another embodiment, the first CPU **12** executes the synchronizing instruction stream. It is contemplated that the execution of the synchronizing instruction stream operates to modify only those electrical signals read from the first disc **17** corresponding to the game information data stream. It is also contemplated that such modification yields a modified database. In yet another embodiment, the first CPU **12** transmits electrical signals to the first disc **17** encoding the modified database.

In one embodiment, the information stored on the second disc **44** is synchronized with the information stored on the first disc **17.**

In one embodiment, WebSync synchronizes the information stored on the second disc **44** with the information stored on the first disc **17.** In one embodiment, the information stored on a DakStats server **65** (**FIG. 4a**) is synchronized with information stored on the central server **66**.

In another embodiment, WebSync synchronizes the information stored on the DakStats server **65** with information stored on the central server 66. In one embodiment, the second CPU **38** receives electrical signals from the second disc **44** encoding a second database. In another embodiment, the second CPU **38** receives magnetic signals from the second disc **44** encoding a second database. In still another embodiment, the second CPU **38** receives optical signals from the second disc **44** encoding a second database. In another embodiment, the second CPU **38** receives a game information data stream from the first CPU **12** by communication path **50**. In another embodiment, the second CPU **38** receives a synchronizing instruction stream from the first CPU **12** by communication path **50**. In still another embodiment, the second CPU **38** executes the synchronizing instruction stream. It is contemplated that the execution of the synchronizing instruction stream operates to modify only those electrical signals read from the second disc **44** corresponding to the game information data stream. It is also contemplated that the execution of the synchronizing instruction stream operates to modify only those magnetic signals read from the second disc **44** corresponding to the game information data stream. It is further contemplated that the execution of the synchronizing instruction stream operates to modify only those optical signals read from the second disc **44** corresponding to the game information data stream. It is also contemplated that such modification yields a modified database. In yet another embodiment, the second CPU **38** transmits electrical signals to the second disc **44** encoding said modified database. In still another embodiment, the second CPU **38** transmits magnetic signals to the second disc **44** encoding the modified database. In yet another embodiment, the second CPU 38 transmits optical signals to the second disc **44** encoding the modified database.

**FIG. 3** illustrates a process **68** corresponding to the present invention. In the first step of the process, Process 1 **70**, the master team information is synchronized with the database **72** (**FIG. 4a**) on the central server **66** (**FIG. 4b**) and the team roster for the master team is synchronized with the central service database **72** on the central server **66**. In the next step of the process, Process 2 **74**, the schedule of the master team is synchronized with central server database **72** on the central server **66**. In the final step of the process, Process 3 **76**, the master team statistics are uploaded to the central server database **72** on the central server **66**. Upon the termination **78** of Process 1 **210** of the claimed process, DakStats will notify the user of exactly what occurred (i.e., three players added, 10 players updated) during Process 1. The user is also notified as to whether Process 1 **70** was successfully completed. Upon the termination **80** of Process 2 **74** of the claimed process, DakStats will notify the user of exactly what occurred (i.e., three competitions added, 10 competitions updated or these competition need to be added to the website) during Process 2. The user is also notified as to whether Process 2 **74** was successfully completed. Upon the termination **82** of Process 3 **76** of the claimed process, DakStats will notify the user of exactly what occurred during Process 3. The user is also notified as to whether Process 3 **76** was successfully completed. Further, once the statistics are successfully uploaded to the central server **66**, the server notifies DakStats of a successful or failed update. At this point, the synchronizing of teams, game schedules, and uploading of information is complete.

**FIG. 4a** is a schematic of the process **84** for synchronization of master team and roster information contained on a DakStats server **65** with master team and roster information **86** contained on the central server **66** by transmitting master team and roster information **86** from the DakStats server **65** to the central server **66** by communication path **90**. In one embodiment, DakStats **88** transmits data to the central server **66** in an XML information stream by the communication path **90**. In another embodiment, DakStats **88** transmits data to the central server **66** in an XML information stream for a team and its players via an HTTP POST command over the communication path **90**. In still another embodiment, the XML information stream contains all information about a team. In still another embodiment, the XML information stream contains all information about a player. In still another embodiment, the XML information stream contains a server ID for each team. In yet another embodiment, the XML information stream contains a server ID for each player. It is contemplated that the server ID may be zero if the player has not been created in the central server database **72**. It is also contemplated that when the central server **66** receives the XML information stream it will add a player to the central server database **72** if the central server database **72** contains a zero server ID for said player.

In one embodiment, the master team information contained on the user interface **20** at the first disc **17** is synchronized with the master team information contained on the central server database **72**. In another embodiment, the team roster information contained on the user interface **20** at the first disc **17** is synchronized with the team roster information contained on the central server database **72**. In still another embodiment, the master team information contained on the DakStats database **92** is synchronized with the master team information contained on the central server database **72**. In yet another embodiment, the team roster information contained on the DakStats database **92** is synchronized with the team roster information contained on the central server database **72**.

In one embodiment, the master team information contained on the user interface **20** at the first disc **17** is synchronized with the master team information contained on the DakStats database **92**. In another embodiment, the team roster information contained on the user interface **20** at the first disc **17** is synchronized with the team roster information contained on the DakStats database **92**.

Communication path **194** of **FIGS. 4a, 4b, 5a, 5b, 5c, 5d and 6** transmits information from central server software **192** to central server database **72.** Communication path **196** of **FIGS. 4a, 4b, 5a, 5b, 5c, 5d and 6** transmits from central server database **72** to central server software **192.** Communication path **102** of **FIGS. 4a, 4b, 4c, 5a, 5b, 5c, 5d, 5e and 6** transmits from DakStats 88 to DakStats database **92.** Communication path **104** of **FIGS. 4a, 4b, 4c, 5a, 5b, 5c,5d, 5e and 6** transmits from DakStats database **92** to DakStats **88**.

**FIG. 4b** is a schematic of a process **94** for receiving master team and roster information by the DakStats server **65** from the central server **66** by transmitting master team and roster information **96** from the central server **66** to the DakStats server **65** by a communication path **98**. In one embodiment, the central server **66** transmits an XML information stream for a master team as a response to the process **84**. In another embodiment, the central server **66** transmits an XML information stream for a team roster as a response to the process **84**. An XML information stream transmitted along the communication path **98** from the central server **66** to the DakStats server **65** is in the exact same format as an XML information stream transmitted along communication path **90** from the DakStats server **65** to the central server **66**. It is contemplated that the XML information stream transmitted along the communication path **98** from the central server **66** to the DakStats server **65** contains all of the master team and roster information **96** from the central server **66**. It is also contemplated that the XML information stream transmitted along the communication path **98** from the central server **66** to the DakStats server **65** contains server IDs assigned by the central server **66**. It is further contemplated that each zero server ID contained in the DakStats database **92** is changed upon receipt, by the DakStats server **65**, of the master team and roster information **96** from the central server **66**.

Communication path **194** of **FIGS. 4a**, **4b**, **5a**, **5b**, **5c**, **5d and 6** transmits information from central server software **192** to central server database **72**. Communication path **196** of **FIGS. 4a**, **4b**, **5a, 5b, 5c, 5d and 6** transmits from central server database **72** to central server software **192.** Communication path **102** of **FIGS. 4a, 4b, 4c, 5a, 5b,5c, 5d, 5e and 6** transmits from DakStats 88 to DakStats database **92.** Communication path **104** of **FIGS. 4a, 4b, 4c, 5a, 5b, 5c, 5d, 5e and 6** transmits from DakStats database **92** to DakStats **88.**

**FIG. 4c** is a schematic of the process **100** for updating the master team and roster information contained in the DakStats database **92.** In one embodiment, DakStats **88** receives an XML information stream containing master team information (XML team information **202**) from the central server **66**. In another embodiment, DakStats **88** transmits the master team information **198** to a DakStats database **92** by communication path **102**. It is contemplated that the master team information contained in the DakStats database **92** is synchronized with the master team information contained in the central server database **72**. In one embodiment, DakStats **88** receives an XML information stream **200** containing player information from the central server **66**. In another embodiment, DakStats **88** transmits the player information to a DakStats database **92** by a communication path **102**. It is contemplated that the player information contained in the DakStats database **92** is synchronized with the player information contained in the central server database **72** by a communication path **104**. It is further contemplated that the server ID for each player contained in the DakStats database **92** is synchronized with the server ID for each player contained in the central server database **72** through communication path **104.**

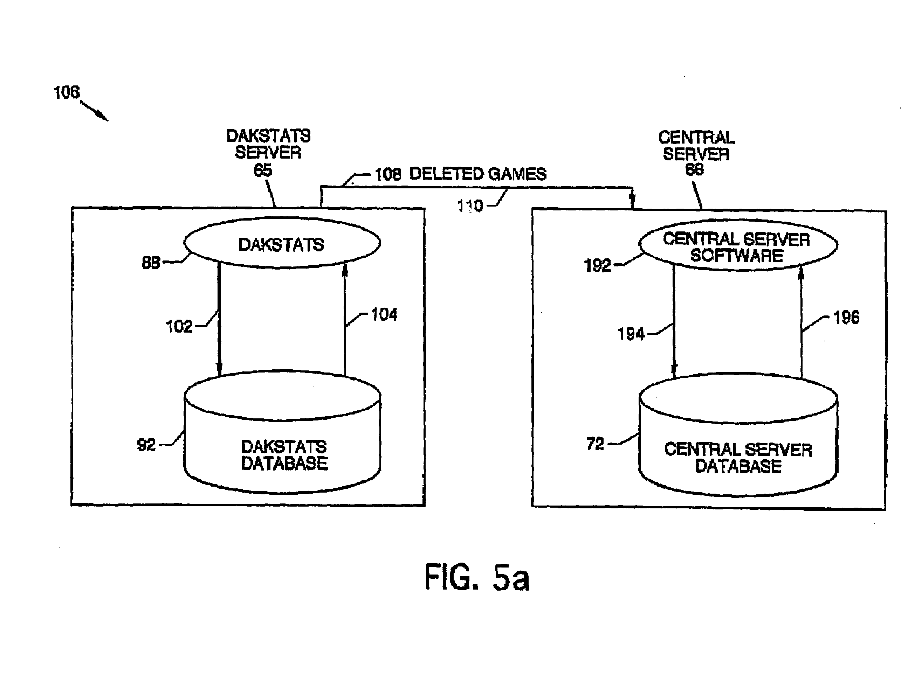

**FIG. 5a** is a schematic of the process **106** for updating and synchronizing the team schedule of the master team. In one embodiment, DakStats **88** generates a list of games to be deleted (deleted games **108**) that have an associated server ID. In another embodiment, DakStats **88** transmits deleted games **108** list to the central server **66** by a communication path **110**. In one embodiment, the DakStats server **65** transmits a list of games to be deleted that have an associated server ID to a third-party server (i.e., the National Junior College Athletic Association "NJCAA" website server) (not shown). In another embodiment, a central server 66 transmits a list of games to be deleted that have an associated server ID to a third-party server (i.e., the NJCAA website server) (not shown). In still another embodiment, the DakStats server 65 transmits a server ID of a game to be deleted to a third-party server (i.e., the NJCAA website server) (not shown). In yet another embodiment, the central server 66 transmits a server ID of a game to be deleted to a third-party server (i.e., the NJCAA website server) (not shown).

Communication path **194** of **FIGS. 4a, 4b, 5a, 5b, 5c, 5d and 6** transmits information from central server software 192 to central server database **72**. Communication path **196** of **FIGS. 4a, 4b, 5a, 5b, 5c, 5d and 6** transmits from central server database **72** to central server software **192.** Communication path **102** of **FIGS. 4a, 4b, 4c, 5a, 5b, 5c, 5d, 5e and 6** transmits from DakStats 88 to DakStats database **92.** Communication path **104** of **FIGS. 4a, 4d, 4c, 5a, 5b, 5c, 5d, 5e and 6** transmits from DakStats database **92** to DakStats **88.**

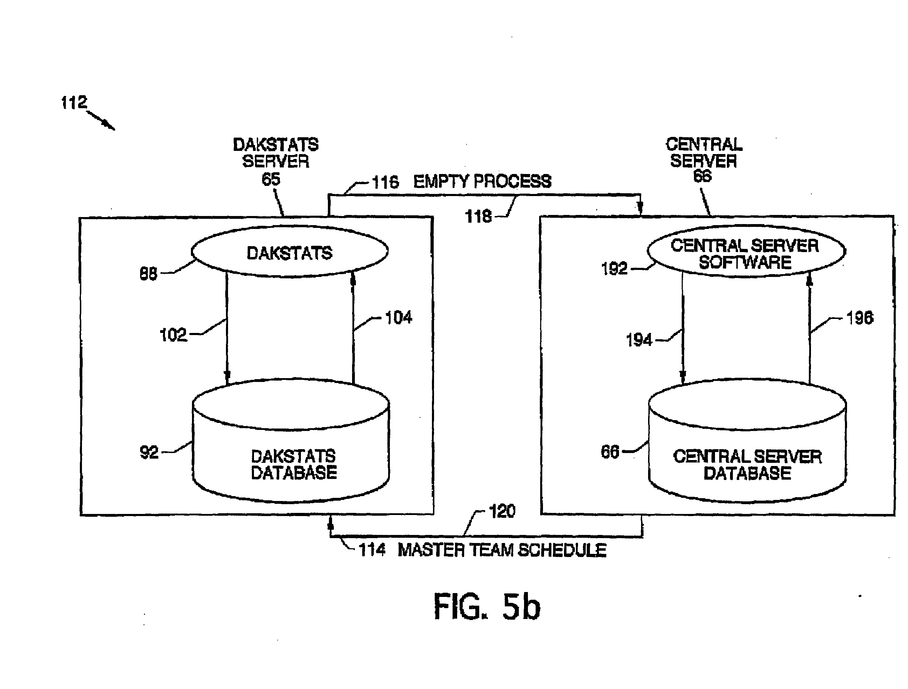

**FIG. 5b** is a schematic of the process **112** for updating and synchronizing the team schedule of the master team. In one embodiment, a server ID of a game existing in the DakStats database **92** is synchronized with a server ID of a game existing in the central server database **72**. In another embodiment, a master team schedule existing in the central server database **72** is synchronized with a master team schedule **114** existing in the DakStats database **92**. It is contemplated that if the server ID of a game existing in the DakStats database **92** is not valid then DakStats **88** transmits an empty process **116** to the central server **66** by a communication path **118**. It is further contemplated that the transmission of the Empty Process **116** to the central server **66** informs the central server **66** that a game is listed as existing in the DakStats database **92** which does not have a valid server ID. In one embodiment, the central server **66** transmits a valid server ID to the DakStats server **65** for each game existing in the DakStats database **92** that does not have a valid server ID. In another embodiment, the central server **66** transmits the master team schedule **114** to a DakStats server **65** by a communication path **120**.

Communication path **194** of **FIGS. 4a, 4b, 5a, 5b, 5c, 5d and 6** transmits information from central server software **192** to central server database **72**. Communication path **196** of **FIGS. 4a, 4b, 5a, 5b, 5c, 5d and 6** transmits from central server database **72** to central server software **192.** Communication path **102** of **FIGS. 4a, 4b, 4c, 5a, 5b, 5c, 5d, 5e and 6** transmits from DakStats 88 to DakStats database **92**. Communication path **104** of **FIGS. 4a, 4b, 4c, 5a, 5b, 5c, 5d, 5e and 6** transmits from DakStats database **92** to DakStats **88.**

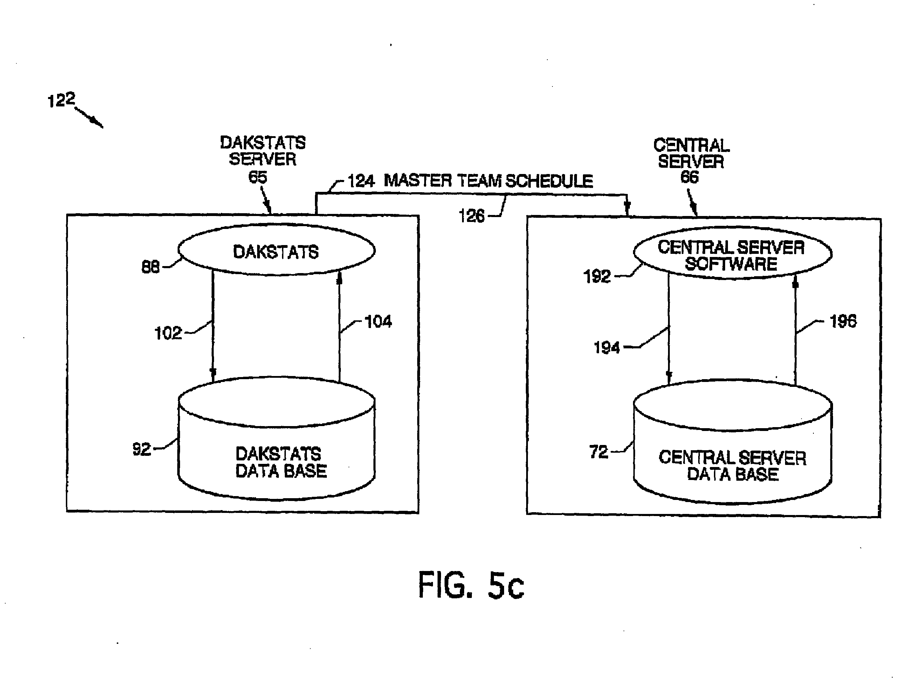

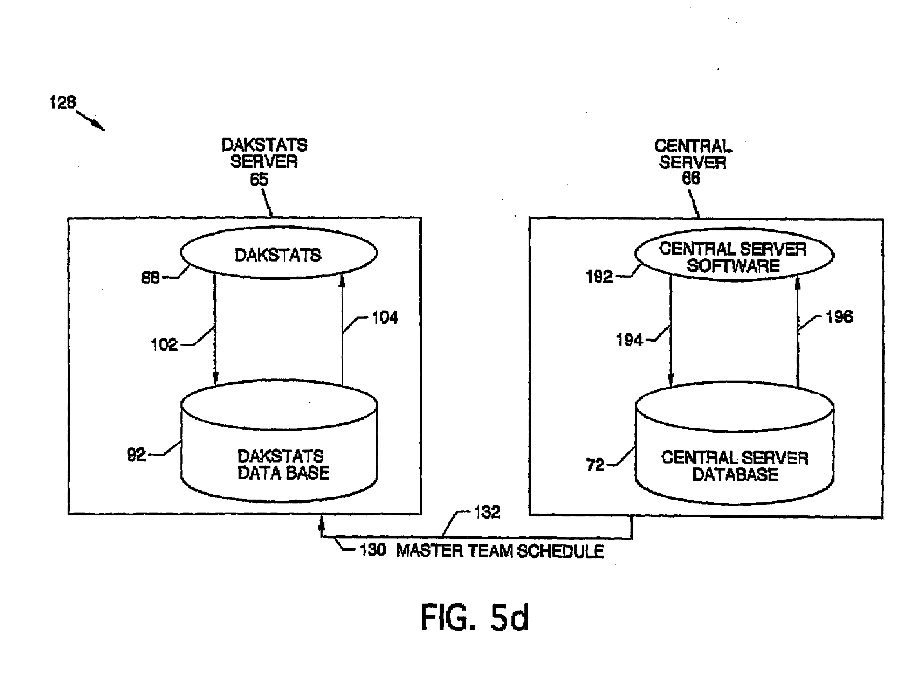

**FIG. 5c** is a schematic of the process **122** for updating and synchronizing the team schedule of the master team by sending the master team schedule to the central server database **72**. In one embodiment, a master team schedule existing in the DakStats database **92** is synchronized with a master team schedule existing in a central server database **72**. In another embodiment, the DakStats server **65** transmits a master team schedule **124** to the central server **66** by a communication path **126**. It is contemplated that the DakStats **88** transmits an XML information stream containing the master team schedule **124** using a HTTP POST command. In one embodiment, an XML information stream contains all scheduled competitions. In another embodiment, an XML information stream contains the identity of each team involved in each game. It is contemplated that an XML information stream contains the server ID for each team involved in each game. It is also contemplated that when the central server database **72** receives the HTTP POST command, the central database will add new competitions to handle competitions that have a zero (0) for their server ID. In one embodiment, the central server **66** generates a new team if such does not currently exist in the central server database **72.**

Communication path **194** of **FIGS. 4a, 4b, 5a, 5b, 5c, 5d and 6** transmits information from central server software **192** to central server database **72**. Communication path **196** of **FIGS. 4a, 4b, 5a, 5b, 5c, 5d and 6** transmits from central server database **72** to central server software **192.** Communication path **102** of **FIGS. 4a, 4b, 4c, 5a, 5b, 5c, 5d, 5e and 6** transmits from DakStats 88 to DakStats database **92.** Communication path **104** of **FIGS. 4a, 4b, 4c, 5a, 5b, 5c, 5d, 5e and 6** transmits from DakStats database **92** to DakStats **88.**

**FIG. 5d** is a schematic of the process **128** for updating and synchronizing the team schedule of the master team by receiving the master team schedule from the central server **66**. In one embodiment, the central server **66** transmits a master team schedule **130** to the DakStats server **65** by a communication path **132**. It is contemplated that the central server **66** transmits an XML information stream containing the master team schedule in response to a process **122**. In one embodiment, the central server 66 transmits an XML information stream containing all of the data from the central server database **72**. In another embodiment, the central server **66** transmits an XML information stream containing server IDs. It is contemplated that no server ID may be zero (0).

Communication path **194** of **FIGS. 4a, 4b, 5a, 5b, 5c, 5d and 6** transmits information from central server software **192** to central server database **72.** Communication path **196** of **FIGS. 4a, 4b, 5a, 5b, 5c, 5d and 6** transmits from central server database **72** to central server software **192**. Communication path **102** of **FIGS. 4a, 4b, 4c, 5a, 5b, 5c, 5d, 5e and 6** transmits from DakStats 88 to DakStats database **92**. Communication path **104** of **FIGS. 4a, 4b, 4c, 5a, 5b, 5c, 5d, 5e and 6** transmits from DakStats database **92** to DakStats **88**.

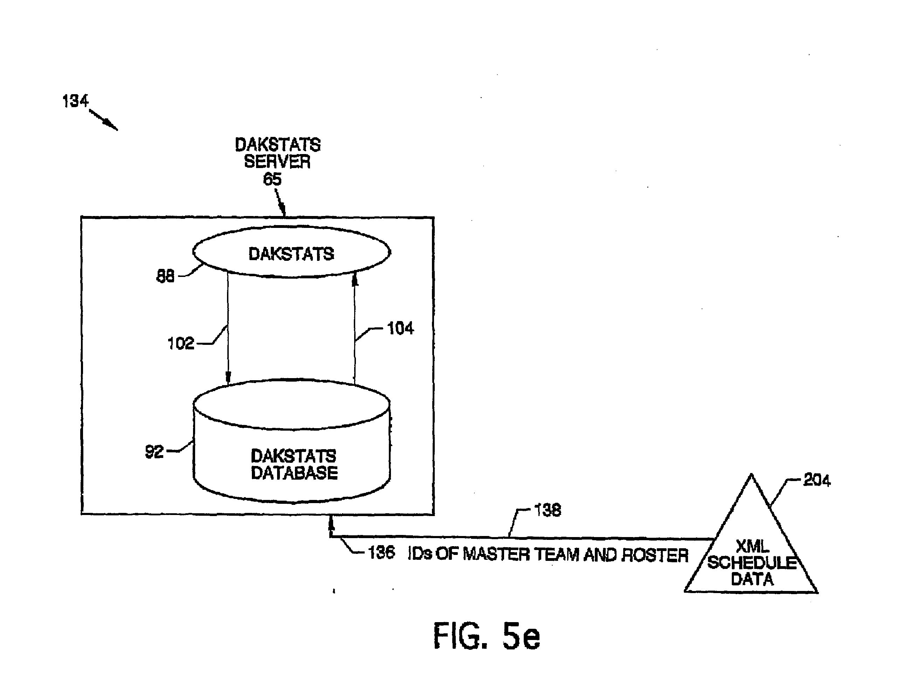

**FIG. 5e** is a schematic of the process **134** for updating and synchronizing the team schedule of the master team by updating the schedule of the master team in the DakStats database **92**. In one embodiment, DakStats **88** receives an XML information stream containing a schedule of the master team (XML schedule data **204**) from the central server **66**. In another embodiment, DakStats **88** transmits a master team schedule **136** to a DakStats database **92** by a communication path **138**. It is contemplated that upon transmitting a master team schedule to the DakStats database **92** by DakStats **88**, the corresponding competition data in said DakStats database **92** is overwritten. It is further contemplated that if more competitions exist on the master team schedule transmitted from the central server **66** to the DakStats server **65**, then any competition not already existing in the DakStats server **65** is added to the DakStats database **92**. In one embodiment, DakStats **88** creates teams for any competition transferred to DakStats server **65** from the central server that does not contain an existing team or teams.

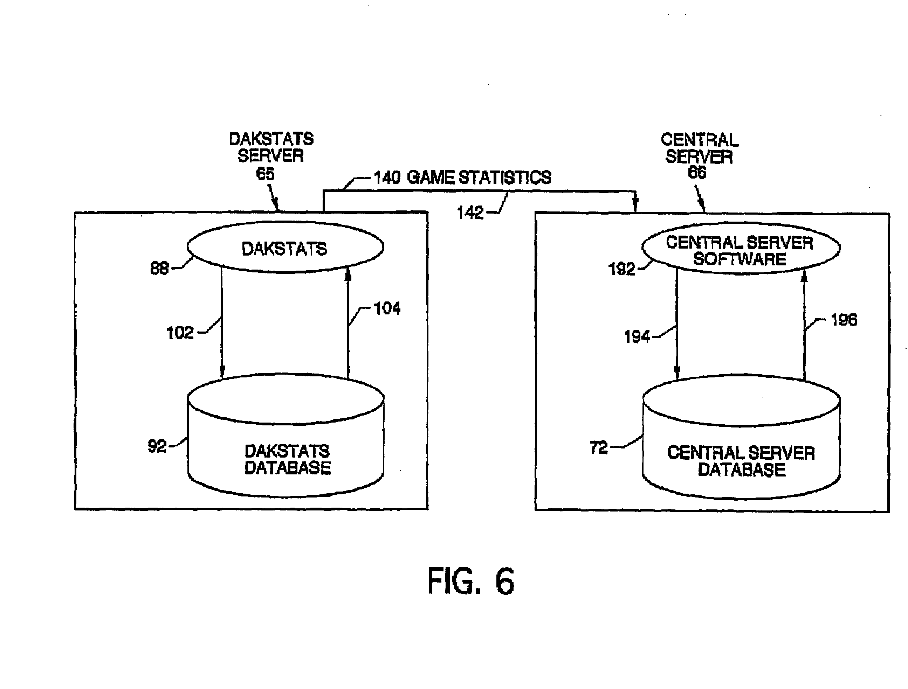

**FIG. 6** illustrates, in one embodiment, game statistics **140** of the master team are transferred to the central server **66** by a communication path **142**. In another embodiment, DakStats **88** transfers an XML information stream using an HTTP POST command to the central server **66**. In still another embodiment, DakStats **88** transfers an XML information stream containing game statistics **140** using an HTTP POST command to the central server **66**. It is contemplated that the game statistics **140** contains team statistics, team information, player statistics and player information. It is further contemplated that the game statistics **140** contains player server IDs.

Communication path **194** of **FIGS. 4a, 4b, 5a, 5b, 5c, 5d and 6** transmits information from central server software **192** to central server database **72.** Communication path **196** of **FIGS. 4a, 4b, 5a, 5b, 5c, 5d and 6** transmits from central server database **72** to central server software **192.** Communication path **102** of **FIGS. 4a, 4b, 4c, 5a, 5b, 5c, 5d, 5e and 6** transmits from DakStats 88 to DakStats database **92.** Communication path **104** of **FIGS. 4a, 4b, 4c, 5a, 5b, 5c, 5d, 5e and 6** transmits from DakStats database **92** to DakStats **88.**

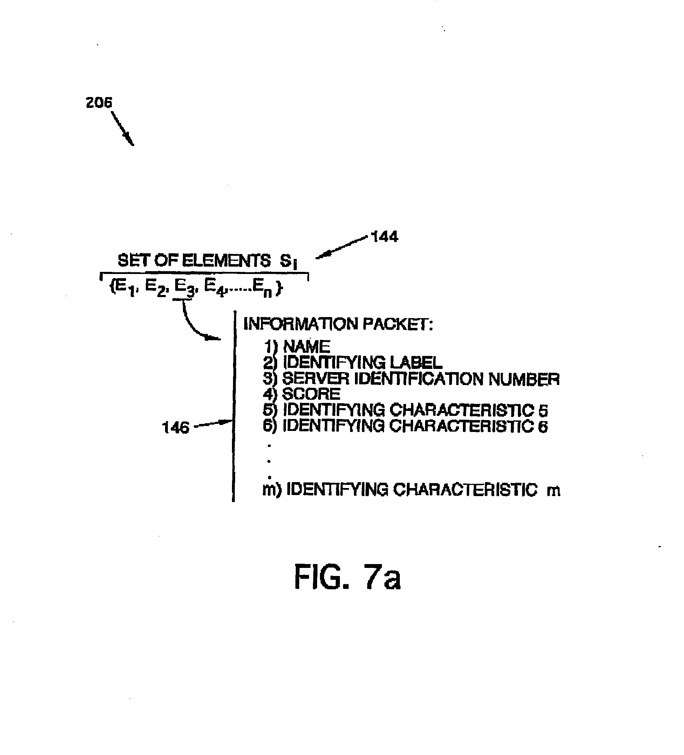

**FIG. 7a** illustrates, in one embodiment, an XML information stream **206** which contains a set, Sᵢ, of elements: {E₁, E₂, E₃, ..., Eₙ} **144.** It is contemplated that each element possesses a set of characteristics **146** as follows: (1) Name; (2) Identifying label; (3) Server Identification Number (also Server ID); (4) Score; (5) Identifying characteristic number 5; (6) Identifying characteristic number 6; .....(m) Identifying characteristic m. In one embodiment, each element of a set of elements (e.g., E₁, E₂, E₃, ..., Eₙ) represents a single player. In another embodiment, each element of a set of elements (e.g., E₁, E₂, E₃, ..., Eₙ) represents a single competitor participating in a game. In still another embodiment, each element of a set of elements (e.g., E₁, E₂, E₃, ..., Eₙ) represents a single member of a co-operative participating in a game. In yet another embodiment, each element of a set of elements (e.g., E₁, E₂, E₃, ..., Eₙ) represents a single entity of a collective.

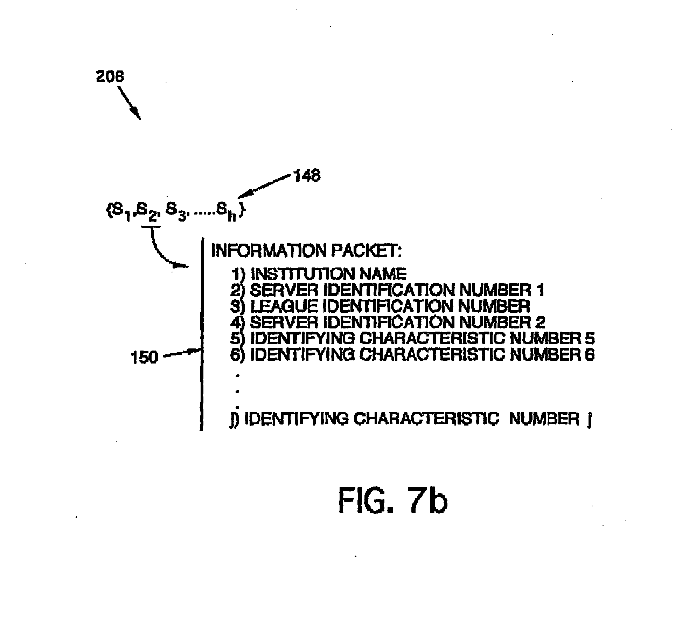

**FIG. 7b** illustrates, in one embodiment, an XML information stream **208** which contains a set **148** comprised of sets, Sᵢ, for i=1(1)h: {S₁, S₂, S₃, ..., Sᵢ, Sₕ}. It is contemplated that each set, S;, possesses a set of characteristics **150** as follows: (1) Institution name; (2) Server identification number 1; (3) League identification number; (4) Server identification number 2; (5) Identifying characteristic number 5; (6) Identifying characteristic number 6; ...;....(j) Identifying characteristic j. In one embodiment, each set of a set of sets (e.g., S₁, S₂, S₃, ..., Sᵢ, Sₕ) represents a single team. In another embodiment, each set of a set of sets (e.g., S₁, S₂, S₃, ..., S;, Sₕ) represents a single team participating in a game. In still another embodiment, each set of a set of sets (e.g., S₁, S₂, S₃, ..., Sᵢ, Sₕ) represents a single co-operative participating in a game. In yet another embodiment, each set of a set of sets (e.g., S₁, S₂, S₃, ..., S;, Sₕ) represents a single collective participating in a game.

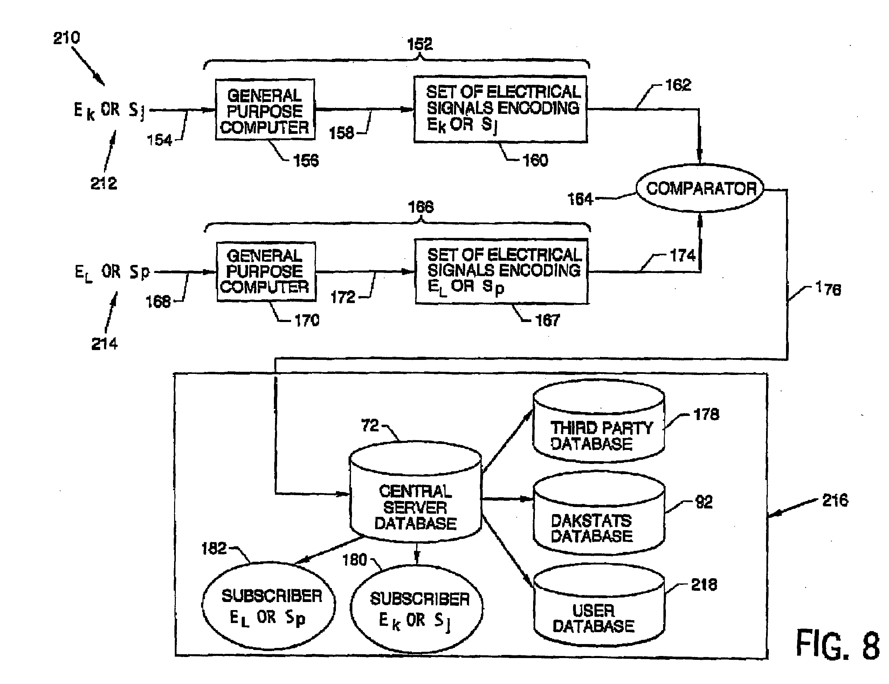

**FIG. 8** is an illustrative comparision **210** (process and device) where, in one embodiment, a set of characteristics **146** for element k (element k is denoted by Eₖ) **212** being compared with a set of characteristics **146** for element L (element L is denoted by E_{L}). It is contemplated that a set of characteristics **146** for element k is converted into a set of electrical signals by a device **152.** In one embodiment with reference to device **152**, a set of characteristics **146** for element k is transmitted by a communication path **154** to a general purpose computer **156**. In another embodiment, the general purpose computer **156** generates and sends by a communication path **158** a first set of electrical signals **160** encoding the set of characteristics **146** for element k. In still another embodiment, the first set of electrical signals **160** is transmitted by a communication path **162** to a comparator **164**.

It is contemplated that a set of characteristics **146** for element L is converted into a set of electrical signals by a device **166**. In one embodiment, a set of characteristics **146** for element L **214** is transmitted by a communication path **168** to a general purpose computer **170**. In another embodiment, the general purpose computer **170** generates and sends by a communication path **172** a second set of electrical signals **167** encoding the set of characteristics **146** for element L. In still another embodiment, the second set of electrical signals **167** is transmitted by a communication path **174** to the comparator **164.**

Still in **FIG. 8,** a comparator **164** generates a third set of signals based upon the first set of electrical signals **160** encoding of the set of characteristics **146** for element k and the second set of electrical signals **167** encoding the set of characteristics **146** for element L. It is contemplated that the third set of electrical signals are transmitted by a communication path **176** to the central server **66**. It is further contemplated that the third set of electrical signals are transmitted by the communication path **176** to the central server database **72** for storage and distribution **216**. In one embodiment, the third set of signals is transmitted to a third-party database **178**. In another embodiment, said third set of signals is transmitted to a DakStats database **92**. In still another embodiment, the third set of signals is transmitted to a user database **218** on the first user disc **17.** In one embodiment, said third set of signals is transmitted to a user corresponding element K, Eₖ, **180.** In another embodiment, the third set of signals is transmitted to a user corresponding to element L, E_{L}, **182.**

In one embodiment, illustrated in **FIG. 8,** the set of characteristics **150** for set j (set j is denoted by Sⱼ) is compared with the set of characteristics **150** for set p (set p is denoted by Sp). It is contemplated that the set of characteristics **150** for set j is converted into a set of electrical signals by the device **152**. In one embodiment, the set of characteristics **150** for set j is transmitted by a communication path **154** to the general purpose computer **156**. In another embodiment, the general purpose computer **156** generates a first set of electrical signals **160** encoding the set of characteristics **150** for set j. In still another embodiment, said set of electrical signals are transmitted by a communication path **162** to the comparator **164**. It is contemplated that the set of characteristics **150** for set p is converted into a set of electrical signals by the device **166**. In one embodiment, the set of characteristics **150** for set p is transmitted by the communication path **168** to the general purpose computer **170**. In another embodiment, the general purpose computer **170** generates a second set of electrical signals **167** encoding the set of characteristics **150** for set p. In still another embodiment, the set of electrical signals is transmitted by the communication path **174** to the comparator **164.**

Still in **FIG. 8,** a comparator generates a third set of signals based upon a first set of electrical signals **160** encoding said set of characteristics **150** for set j and a second set of electrical signals **167** encoding the set of characteristics **150** for set p. It is contemplated that the third set of signals is transmitted by a communication path **176** to the central server **66** for storage and distribution **216**. It is further contemplated that the third set of signals is transmitted by the communication path **176** to the central server database **72**. In one embodiment, the third set of signals is transmitted to a third-party database **178**. In another embodiment, the third set of signals is transmitted to the DakStats database **92**. In still another embodiment, the third set of signals is transmitted to a user database **218** on the first disc **17**. In one embodiment, the third set of signals is transmitted to a subscriber **180** corresponding to set j, Sⱼ,. In another embodiment, the third set of signals is transmitted to the subscriber **182** corresponding to set p, Sₚ,.

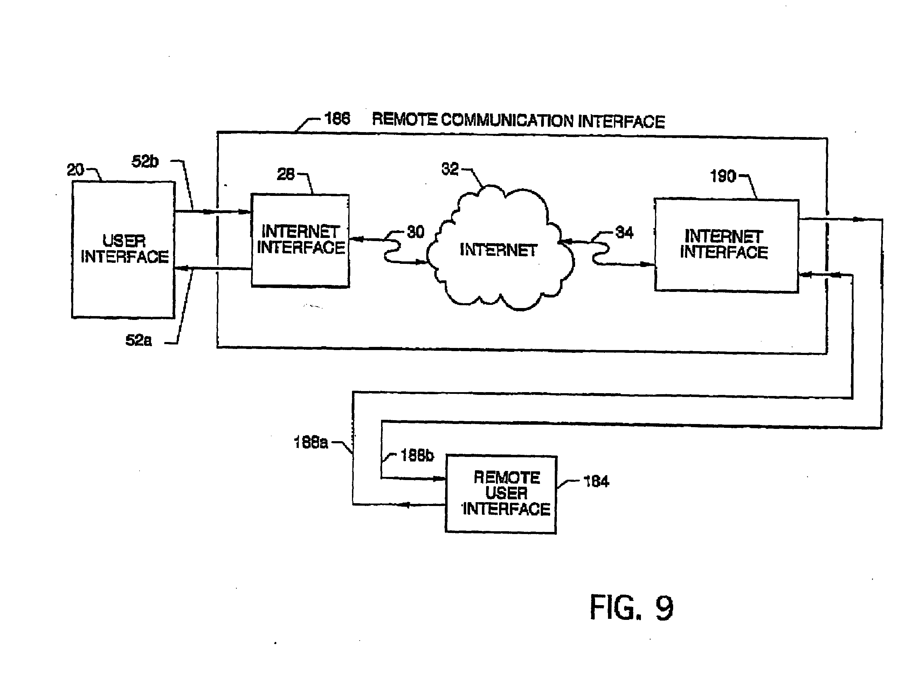

**FIG. 9** illustrates, in one embodiment, the user interface **20** transmits by communication path **52b** information to a remote user interface **184** through a remote communication interface **186**. The user interface **20** and the remote user interface **184** are in electrical communication. The user interface **20** and the remote user interface **184** are in electro-magnetic communication. In another embodiment, the user interface **20** receives by communication path **52a** information from the remote user interface **184** through the remote communication interface **186.** In yet another embodiment, the remote user interface **184** transmits by communication path **188a** information to the user interface **20** through the remote communication interface **186**. In still another embodiment, the remote user interface **184** receives by communication path **188b** information from the user interface **20** through the remote communication interface **186.**

Still in **FIG. 9,** in one embodiment, the remote communication interface **186** is comprised of the first internet interface **28** in electrical communication by communication path **30** with a wide area network, such as the Internet **32**. In another embodiment, the remote communication interface **186** is comprised of a wide area network, such as the Internet **32**, in electrical communication by communication path **30** with a second internet interface **190**. The user interface **20** and the remote communication interface **186** are in electrical communication. The remote user interface **184** and the remote communication interface **186** are in electrical communication.

In one embodiment, the CPU **12** operates as an information processor. In another embodiment, the CPU **12** operates to analyze information. In one embodiment, the remote communication interface **186** operates as an information input to transmit by communication path **188a** information to the information process processor in the CPU **12**. In another embodiment, the remote communication interface **186** operates as an information input to transmit by communication path **188a** information for information analysis by the CPU **12**. In yet another embodiment, the remote communication interface **186** operates to store information for receiving by communication path **188b** information from the information processed by the CPU **12**. In still another embodiment, the remote communication interface **186** operates to store information by receiving by communication path **188b** information from the information analyzed by the CPU **12**.

### MODE OF OPERATION

The present invention allows statistical software users to exchange team, competition and roster information and to upload statistics to a central database by means of the Internet. In one embodiment, the statistical software is provided by Daktronics. In another embodiment, the statistical software is provided by another vendor.

It is contemplated that the present invention can be used by any association or co-operative that collect, catalogue, and analyze data from a large group of members. For instance, an association of horse owners could use the claimed invention to collect, catalogue, and analyze statistics from their own horses and correlate the performance of their own horses with horses from other owners that are members of the association or co-operative. The disclosed invention can also be applied to show animals (such as rabbits, dogs, horses, goats, chickens, and hogs) as well. The WebSync feature can also be used to collect, catalogue, and analyze performance information on breeder animals. In this embodiment, the breeding performance statistics for a set of animals belonging to one breeder would be collected and catalogued on the central data base. By analyzing the correlations amongst animals belonging to one breeder and between animals belonging to several breeders, the best pairing could be determined. It is further contemplated that the WebSync feature can be used by other organizations that collect statistics for member teams. These other associations may consist of state high school associations, college athletic associations or other athletic governing bodies. The WebSync feature can be used to synchronize with databases hosted by the associations, third-party companies or a Daktronics hosted database.

Various modifications can be made to the present invention without departing from the apparent scope thereof.

## Claims

1. A system for game information synchronization comprising:
a. a user interface;
b. a communication interface in communication with said user interface;
c. a remote central server in communication with said communication interface: and
d. game information synchronization means for synchronizing game information between the user interface and the central server.

2. The system for game information synchronization as claimed in claim 1 wherein the game information synchronization means is provided on the central server.

3. The system for game information synchronization as claimed in claim 1 wherein the game information synchronization means is provided on the user interface.

4. The system for game information synchronization as claimed in any one of the preceding claims wherein said user interface or said central server further comprises a means for database storage.

5. The system for game information synchronization as claimed in any one of the preceding claims, wherein said user interface or said central server further comprises an information input means.

6. The system for game information synchronization as claimed in any one of the preceding claims, wherein said user interface or said central server further comprises an information analysis means.

7. The system for game information synchronization as claimed in any one of the preceding claims, wherein said user interface or said central server further comprises an information cataloguing means.

8. The system for game information synchronization as claimed in any one of the preceding claims, wherein said user interface or said central server further comprises an information archiving means.

9. The system for game information synchronization as claimed in any one of the preceding claims, wherein said user interface or said central server further comprises a set of electrical, magnetic or optical signals encoding a database.

10. The system for game information synchronization as claimed in any one of the preceding claims in which the game information synchronization means embeds into a HTTP POST command information for transmission across the communication interface.

11. The system for game information synchronization as claimed in any one of the preceding claims in which the game information synchronization means embeds into an HTTP POST command executable code for transmission across the communication interface.

12. A system for synchronizing game information across a wide area network, the network operating by means of a communication protocol having protocol commands, the system comprising:
a. a first game information processing means;
b. a communication interface in communication with said information processing means; and,
c. a second game information processing means in communication with said communication interface; wherein in order to transmit game information across the communication interface said first game information processing means embeds said information into a protocol command.

13. The system for synchronizing game information as claimed in claim 12, wherein said command is HTTP POST.

14. The system for synchronizing game information as claimed in claim 12, wherein said first game information processing means comprises a first database.

15. The system for synchronizing game information as claimed in claim 12, wherein said second game information processing means comprises a second database.

16. The system for synchronizing game information as in claim 12, further comprising a plurality of electrical, magnetic or optical signals which encode instructions for embedding game information into the said protocol command or which encode instructions for synchronizing a first database with a second database.

17. A system for synchronizing game information across a wide area network comprising:
a. a first server;
b. a first set of signals generated by said first server;
c. a second server in communication with said first server;
d. a second set of signals generated by said second server;
wherein said first set of signals encode game information, and wherein said second set of signals encode game information.

18. A process for game information synchronization comprising the steps of:
a. processing game information on a first server;
b. storing said processed game information on the first server;
c. transferring said processed stored game information to a second server;
d. processing game information on the second server;
e. storing said processed game information on the second server; and,
f. transferring said processed stored game information to the first server.

19. The process for game information synchronization as claimed in claim 18, further comprising synchronizing first game information on the first server with second game information on the second server.

20. The process for game information synchronization as claimed in claim 18, further comprising:
a. archiving first game information on the first server; and,
b. archiving second game information on the second server.

21. A statistical information collection, cataloguing, and analyzing process comprising the steps of:
a. identifying a set of elements;
b. generating a set of identification information characteristic of said set of elements;
c. synchronizing said set of identification information with a database;
d. synchronizing a schedule of events with a database; and,
e. transferring information about each element of said set to a database.
